# EUROPEAN PATENT APPLICATION

(11) **EP 1 727 367 A2**
(43) Date of publication of application: **29.11.2006**
(21) Application number: 06114188.3
(22) Date of filing: 18.05.2006
(51) Int. Cl.: H04N 7/24, G11B 20/10, H04N 5/76

(54) **Electronic apparatus, image control method and image control program**

(30) Priority: 23.05.2005 JP 2005149513
(71) Applicant: KABUSHIKI KAISHA TOSHIBA, Tokyo 105-8001 (JP)
(72) Inventor: Watanabe, Satoshi Intellectual Property Division, Tokyo (JP)
(74) Representative: Henkel, Feiler & Hänzel

(57) **Abstract**

An electronic apparatus includes: a communication unit (11) that receives a stream of video data transmitted through a computer network; a buffer unit (12) that sequentially accumulates the video data received by the communication unit (11) as input data and sequentially outputs the accumulated video data; a video processing unit (13) that records and plays back the data sequentially output from the buffer unit; and a controller (19) that performs control so that substitute data to be substituted for the video data are input into the buffer unit (12) when the stream of video data received by the communication unit (11) is interrupted and an amount of the data accumulated in the buffer unit (12) is smaller than a predetermined amount.

## Description

### CROSS-REFERENCE TO RELATED APPLICATIONS

This application is based upon and claims the benefit of priority from Japanese Patent Application No. 2005-149513, filed on May 23, 2005, the entire contents of which are incorporated herein by reference.

### BACKGROUND

### 1. Field

One embodiment relates to an electronic apparatus, an image control method and an image control program for receiving and recording/playing back a stream of video data transmitted through a network.

### 2. Description of the Related Art

Video data (such as images of TV broadcast programs) transmitted from a video generating apparatus such as a TV tuner through a network such as an LAN have been popularly received and recorded/played back by an electronic apparatus such as a personal computer in recent years. A video playback function such as a video playback program can be used in the electronic apparatus such as a personal computer for achieving a playback of videos.

In the form that a stream of video data transmitted through a network is received, the stream is interrupted halfway when a transmission failure or the like occurs. In such a case, the video playback function of the electronic apparatus may stop so that the recording/playback process is terminated. For resumption of the recording/playback process, a user has to make an operation manually to restart the video playback function. However possible the restart of the recording/playback process may be, a serious loss will be brought because a considerable time has to be taken until the restart. In addition, increase in number of unnecessary image files will be consequently brought because it is necessary, at the time of the restart, to store image data as another file than the file for the image data already transmitted before occurrence of the failure.

Incidentally, there is disclosed in JP-A-2003-169299 a technique in which received image data are output from an image output unit while recorded in an image recording unit so that images such as videos can be played back continuously without interruption even when a transmission failure occurs in a network.

In the technique disclosed in JP-A-2003-169299, however, when the state of interruption of the stream is continued for a long time, playback data accumulated in the image recording unit will be exhausted later on to make it impossible to play back the images continuously even if the data transmission bit rate is reduced.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is an exemplary block diagram showing the configuration of a system including an electronic apparatus and a video generating apparatus according to an embodiment;

Fig. 2 is an exemplary block diagram showing the functional configuration of a control unit depicted in Fig. 1;

Fig. 3 is an exemplary table for explaining the relation between various states monitored by the control unit depicted in Fig. 1 and their control contents;

Fig. 4 is an exemplary view showing the state that received data are accumulated in a queue;

Fig. 5 is an exemplary view showing the state that the data accumulated in the queue decrease because reception is interrupted;

Fig. 6 is an exemplary view showing the state that the data accumulated in the queue are exhausted because the interrupted state of reception is continued;

Fig. 7 is an exemplary view showing the state that substitute data are accumulated in the queue;

Fig. 8 is an exemplary view showing the state that received data are accumulated in the queue because reception is recovered;

Fig. 9 is an exemplary view showing the state that the internal state of the queue returns to a normal state because the data receiving state is continued; and

Fig. 10 is an exemplary flow chart showing an example of the image control operation.

### DETAILED DESCRIPTION

Various embodiments according to the invention will be described hereinafter with reference to the accompanying drawings.

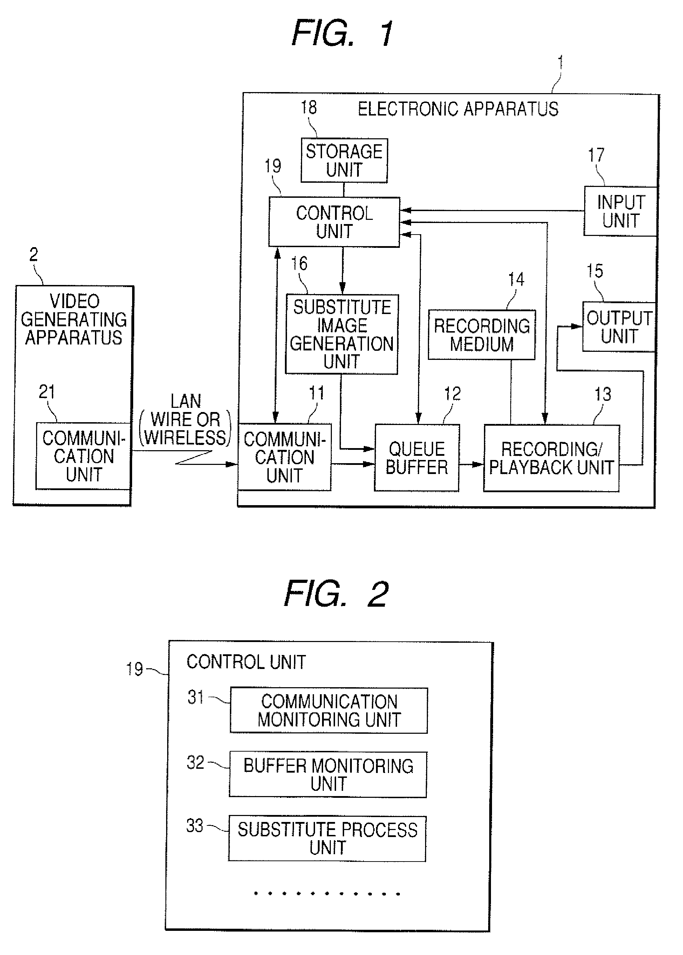

Fig. 1 is a block diagram showing the configuration of a system including an electronic apparatus and a video generating apparatus according to an embodiment.

For example, the electronic apparatus 1 is a personal computer (PC) having a function of receiving and recording/playing back a stream of video data transmitted from the video generating apparatus 2 through a network (such as a wired LAN or a wireless LAN). Incidentally, a recording/playback apparatus, a PDA, a cellular phone, etc. may be used in place of the PC as long as it is an apparatus having a video recording/playback function and a communication function.

For example, the video generating apparatus 2 is a TV tuner having a communication unit 21 for performing communication based on the wire or wireless LAN with a communication unit 11 provided in the electronic apparatus 1. The communication unit 21 transmits a stream of video data such as a TV broadcast program to the electronic apparatus 1 through the network (such as a wire LAN or a wireless LAN). The transmitted video data are compressed and encoded, for example, by a method according to MPEG 2. Incidentally, the stream transmitted from the video generating apparatus 2 to the electronic apparatus 1 through the network may be interrupted due to various causes (such as electromagnetic interference concerned with the frequency band of electromagnetic wave generated from a microwave oven, etc. or in the presence of a plurality of access points, user's mistaken operation on the video generating apparatus 2 side, shorter data-transmittable distance than the distance between the video generating apparatus and the electronic apparatus, and so on).

The electronic apparatus 1 has the communication unit 11, a queue buffer 12, a recording/playback unit 13, a recording medium 14, an output unit 15, a substitute image generation unit 16, an input unit 17, a storage unit 18, and a control unit 19.

The communication unit 11 performs communication based on the wire or wireless LAN with the communication unit 21 provided in the video generating apparatus 2. The communication unit 11 requests the video generating apparatus 2 to transmit video data such as a TV broadcast program, receives the video data transmitted consecutively in response to the request, and sends out the video data to the queue buffer 12.

The queue buffer 12 sequentially and temporarily accumulates the received data transmitted from the communication unit 11 or substitute data transmitted from the substitute image generation unit 16 and sequentially transmits the received data or substitute data to the recording/playback unit 13 at a constant speed. The queue buffer 12 has a queue for queuing the input data.

The recording/playback unit 13 includes a video playback program executed by the control unit 19. The recording/playback unit 13 receives the video data etc. sequentially transmitted from the queue buffer 12, and records/plays back the video data etc. (such as a TV broadcast program). When the video data etc. transmitted from the queue buffer 12 are exhausted, the operation of the recording/playback unit 13 stops. In a recording process, the recording/playback unit 13 records the video data etc. transmitted from the queue buffer 12 in the recording medium 14. On the other hand, in a playback process, the recording/playback unit 13 decodes the video data etc. transmitted from the queue buffer 12 or the video data etc. read from the recording medium 14, and sends out the decoded video data etc. to the output unit 15.

The recording medium 14 is used for recording the video data received by the recording/playback unit 13 from the queue buffer 12 in real time or for playing back the recorded video data etc.

The output unit 15 is equivalent to a display device for outputting the video data etc. played back from the recording/playback unit 13.

The substitute image generation unit 16 generates substitute data (dummy data) to be substituted for the video data which are lost when the stream received by the communication unit 11 is interrupted halfway. The substitute image generation unit 16 is controlled by the control unit 19 to send out the substitute data to the queue buffer at predetermined timing. For example, the substitute data may be data of an image which is wholly painted with a predetermined color (e.g. blue) and which may include a message, etc. for indicating the fact that the image is a substitute image. Alternatively, a plurality of substitute images may be prepared so that any one substitute image can be selected from these substitute images.

The input unit 17 performs various operations concerned with recording/playback, edition of a recorded image, selection of a substitute image.

The storage unit 18 is a memory for storing a video playback program which is basic software necessary for recording/playing back videos, an image control program for controlling images by using substitute images according to this embodiment.

The control unit 19 is equivalent to a processor for handling the overall operation of the electronic apparatus 1. The control unit 19 executes the image control program, the video playback program, etc. to control various constituent members of the electronic apparatus 1.

On execution of the image control program, the control unit 19 instructs the recording/playback unit 13 to perform a playback or recording process in accordance with the user's request.

Further, on execution of the image control program, the control unit 19 monitors the amount of the data accumulated in the queue buffer 12 while monitoring the state of the stream of video data received by the communication unit 11 to thereby perform control in such a manner that substitute data to be substituted for interrupted video data are input from the substitute image generation unit 16 into the queue buffer 12 when the stream of video data received by the communication unit 11 is interrupted halfway and the amount of the data accumulated in the queue buffer 12 is smaller than a predetermined amount. In this manner, the stream having its lost part due to a transmission failure or the like compensated with the substitute data can be input into the recording/playback unit 13.

Incidentally, even when the stream of video data received by the communication unit 11 is interrupted halfway, data remaining in the queue buffer 12 can be used for continuing recording/playback if the amount of the data accumulated in the queue buffer 12 is not smaller than the predetermined amount. In this case, the control unit 19 performs control so that the substitute data are not input into the queue buffer 12 but the data remaining in the queue buffer 12 are recorded/played back by the recording/playback unit.

When the interrupted stream of video data is recovered, the control unit 19 performs control so that the substitute data are not input into the queue buffer but the video data received by the communication unit 11 are input into the queue buffer 12.

Fig. 2 is a block diagram showing the functional configuration of the control unit depicted in Fig. 1.

The control unit 19 has various functions as implemented by a communication monitoring unit 31, a buffer monitoring unit 32 and a substitute processing unit 33.

The communication monitoring unit 31 has a function of monitoring the state of the stream of video data received by the communication unit 11. Particularly, the communication monitoring unit 31 monitors whether the stream of video data received by the communication unit 11 is interrupted halfway or not. For example, the communication monitoring unit 31 recognizes the normally receivable data interval and timing on the basis of a designated transmission speed (bps) to thereby judge whether the stream is interrupted or not.

The buffer monitoring unit 32 has a function of monitoring the amount of data accumulated in the queue buffer 12. Particularly, the buffer monitoring unit 32 monitors whether the amount of data accumulated in the queue buffer 12 is smaller than a predetermined amount or not. For example, the buffer monitoring unit 32 may start time measurement at a point of time that the stream of video data is interrupted, and may make a decision that the amount of data becomes smaller than the predetermined amount when the interrupted state of the stream is unchanged in spite of passage of a predetermined time after the start of time measurement.

When a monitoring result of the communication monitoring unit 31 indicates interruption of the stream (failure in data reception) and a monitoring result of the buffer monitoring unit 32 indicates shortage of the accumulated data, the substitute processing unit 33 performs control so that substitute data are input from the substitute image generation unit 16 into the queue buffer 12. When the monitoring result of the communication monitoring unit 31 indicates recovery of the stream, the substitute processing unit 33 performs control so that the video data received by the communication unit 11 are input into the queue buffer 12 while the substitute data are prohibited from being input from the substitute image generation unit 16 into the queue buffer 12.

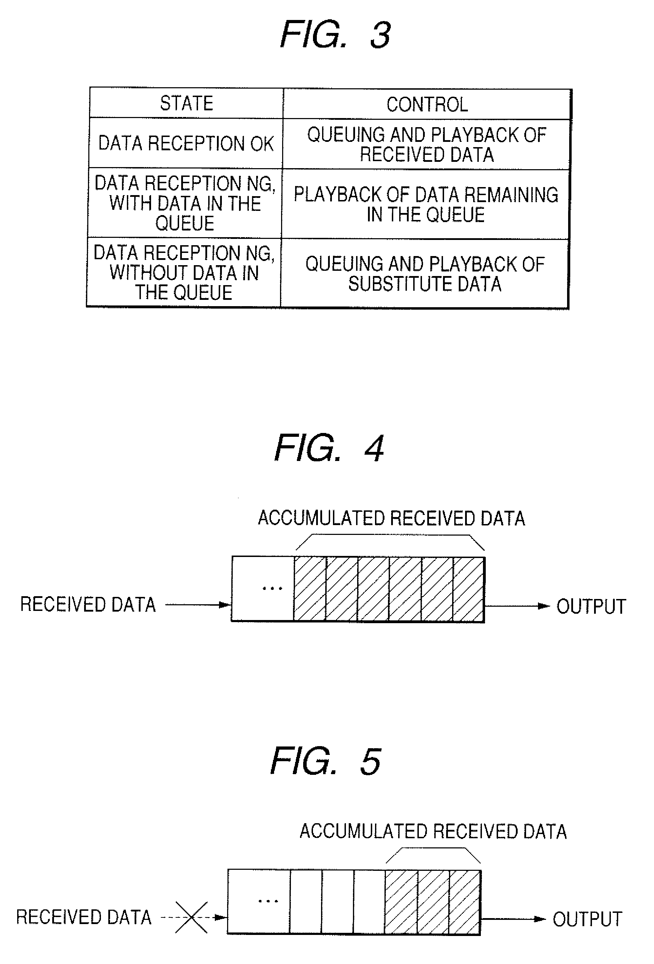

Fig. 3 is a table for explaining the relation between various states monitored by the control unit depicted in Fig. 1 and their control contents.

During the period that the stream of video data transmitted from the video generating apparatus 2 is transmitted to the electronic apparatus 1 normally without any interruption, the communication unit 11 can receive the video data accurately. In this case, the received video data are queued in the queue buffer 12 and then recorded/played back by the recording/playback unit 13.

On the other hand, during the period that the stream of video data transmitted from the video generating apparatus 2 is interrupted halfway, the communication unit 11 cannot receive the video data. Recording/playback is however continued as long as any data remains in the queue buffer 12.

When the stream of video data transmitted from the video generating apparatus 2 is interrupted halfway and no data remains in the queue buffer 12, the operation of the recording/playback unit 13 will stop because there is no data sent out from the queue buffer 12 to the recording/playback unit 13 unless some measures are taken. Therefore, in this embodiment, substitute data compensating for the interrupted unit of the stream are transmitted from the substitute image generation unit 16 to the queue buffer 12 to avoid this trouble. Thus, the substitute data are queued in the queue buffer 12 and recorded/played back by the recording/playback unit 13.

An example of the data queuing operation in the queue buffer 12 will be described below with reference to Figs. 4 to 9.

As shown in Fig. 4, during the period that the stream of video data transmitted from the video generating apparatus 2 is transmitted to the electronic apparatus 1 normally without halfway interruption, data received by the communication unit 11 are input and accumulated in the queue in the queue buffer 12 and sent out sequentially to the recording/playback unit 13.

As shown in Fig. 5, when the stream of video data transmitted from the video generating apparatus 2 is interrupted halfway, the received data accumulated in the queue decrease little by little because the communication unit 11 cannot receive the video data.

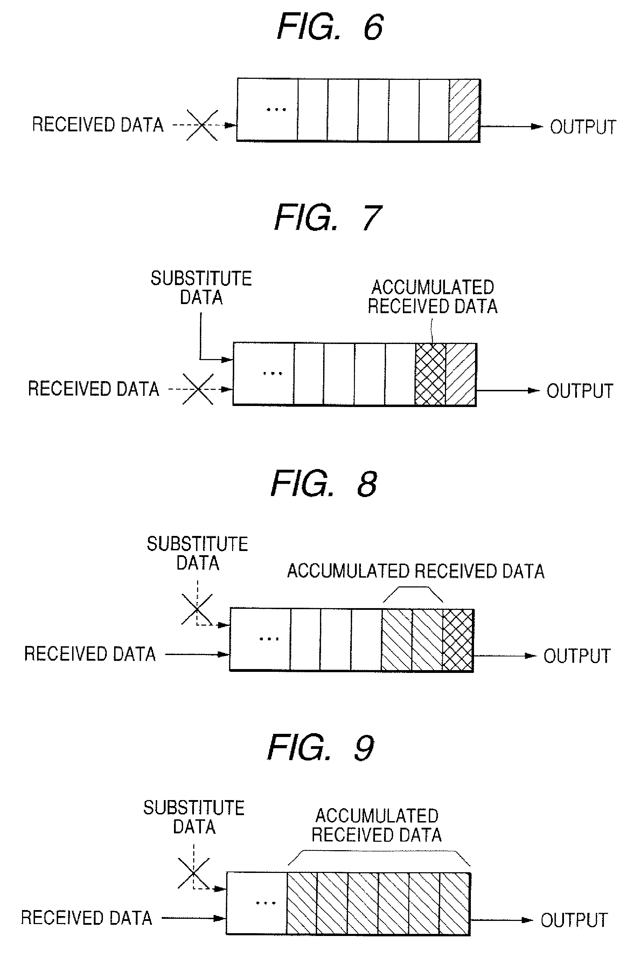

As shown in Fig. 6, when the interrupted state of the stream is continued, the data accumulated in the queue are exhausted sooner or later.

As shown in Fig. 7, substitute data generated from the substitute image generation unit 16 are input into the queue before the data accumulated in the queue are exhausted thoroughly. Control is performed so that the substitute data are accumulated and output as data following the latest received data accumulated in the queue. Inputting, accumulation and outputting of the substitute data are continued unless the interrupted state of the stream changes.

As shown in Fig. 8, when the interrupted stream is recovered so that the communication unit 11 can receive the video data, the substitute data are prohibited from being input into the queue. Control is performed so that the received data are input into the queue and accumulated and output as data following the latest accumulated substitute data.

As shown in Fig. 9, when the state that the stream of video data transmitted from the video generating apparatus 2 is transmitted normally to the electronic apparatus 1 without any interruption is continued, data received by the communication unit 11 are input into the queue so that the internal state of the queue returns to a normal state.

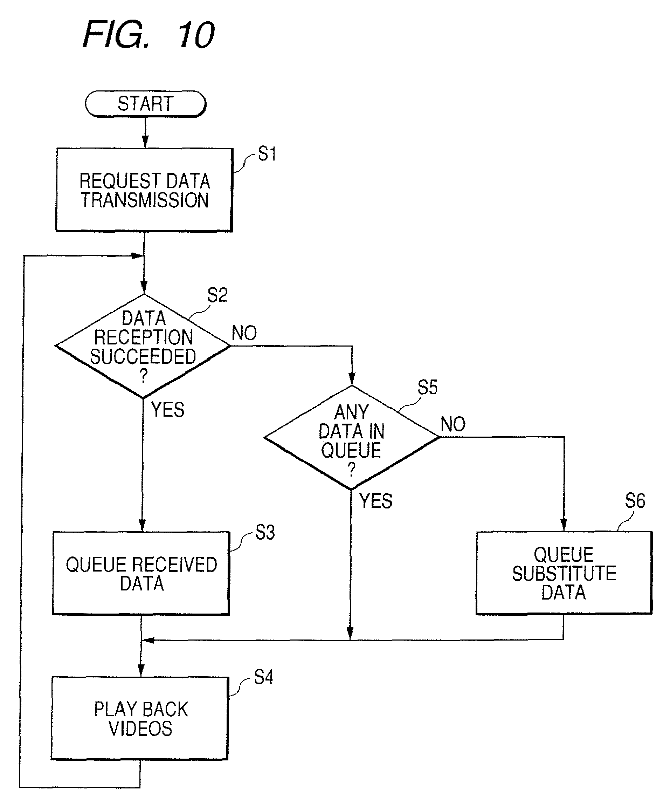

An example of the image control operation in this embodiment will be described below with reference to Fig. 10.

The communication unit 11 provided on the electronic apparatus 1 establishes a connection state of communication with the communication unit 21 provided on the video generating apparatus 2 and requests the video generating apparatus 2 to transmit video data (such as broadcast images of a certain TV program) (Block S1). On this occasion, information necessary for transmission of the video data, such as information for designating the transmission speed (bps) of the video data, is also transmitted to the electronic apparatus 1.

When the communication unit 21 provided on the video generating apparatus 2 transmits the requested video data to the communication unit 11 provided on the electronic apparatus 1, the communication unit 11 receives the video data and sends out the received video data to the queue buffer 12.

The control unit 19 determines whether the video data have been received by the communication unit 11 accurately or not (Block S2). When reception of the data succeeded (Yes in Block S2), the received data are queued in the queue buffer (Block S3) and recorded or played back by the recording/playback unit 13 (Block S4).

On the other hand, when a decision is made in Block S2 that reception of the data did not succeed (No in Block S2), the control unit 19 determines whether a larger amount of data than a predetermined amount remains in the queue of the queue buffer 12 or not (Block S5). When a larger amount of data than the predetermined amount remains in the queue, the remaining data are recorded or played back by the recording/playback unit 13 (Block S4).

When a decision is made in Block S5 that a larger amount of data than the predetermined amount does not remain in the queue (N in Block S5), the video data are regarded as being unable to be supplied to the recording/playback unit 13 continuously, that is, substitute data generated by the substitute image generation unit 16 are queued in the queue buffer (Block S6) and recorded or played back by the recording/playback unit 13 (Block S4).

When the stream of video data was then recovered and reception of data succeeded (Yes in Block S2), received data are queued in the queue buffer like before (Block S3) and recorded or played back by the recording/playback unit 13 (Block S4).

In this manner, according to this embodiment, image control using substitute data can be performed even when a stream of video data is interrupted halfway due to a transmission failure or the like in the form that the stream of video data transmitted through a network is received. Accordingly, a recording/playback process can be continued without stopping the video playback function of the electronic apparatus.

Moreover, an image painted with a color (e.g. blue) except black is used as the substituted data, so that a user viewing the image displayed at the time of playback can be prevented from recognizing stopping of the playback function by mistake. Also when data including such an image are played back after recorded, there is an advantage that it is easy to recognize and edit the image of the substitute data.

Various processing procedures according to the invention as described above in the embodiment may be stored as a computer program in a computer-readable recording medium (such as a magnetic disk, an optical disk or a semiconductor memory) in advance so that the computer program can be read and executed by a processor in accordance with necessity. The concept "computer" mentioned here includes an information processing apparatus or an electronic apparatus which can execute the program, such as a recording/playback apparatus, a PDA or a cellular phone. In addition, the computer program can be distributed in such a manner that the computer program is transmitted from one computer to another computer through a communication medium.

The present invention is not limited to the embodiment and can be embodied by modification of the constituent members in a practical stage of the invention without departing from the gist of the invention. In addition, constituent members disclosed in the embodiment can be used in suitable combination to form various inventions. For example, several constituent members may be removed from all the constituent members disclosed in the embodiment. Moreover, constituent members in different embodiments may be used in suitable combination.

## Claims

1. An electronic apparatus comprising:
a communication unit that receives a stream of video data transmitted through a computer network;
a buffer unit that sequentially accumulating the video data received by the communication unit as input data and sequentially outputs the accumulated video data;
a video processing unit that records and plays back the data sequentially output from the buffer unit; and
a controller that performs control so that substitute data to be substituted for the video data are input into the buffer unit when the stream of video data received by the communication unit is interrupted and an amount of the data accumulated in the buffer unit is smaller than a predetermined amount.

2. The electronic apparatus according to claim 1, further comprising a substitute data generation unit that generates the substitute data.

3. The electronic apparatus according to claim 1, wherein the buffer unit includes a queue for queuing the video data or substitute data input into the buffer unit.

4. The electronic apparatus according to claim 1, wherein the controller performs control so that the substitute data are not input into the buffer unit and that data remaining in the buffer unit are recorded or played back by the video processing unit when the stream of video data received by the communication unit is interrupted and the amount of the data accumulated in the buffer unit is not smaller than the predetermined amount.

5. The electronic apparatus according to claim 1, wherein the controller performs control so that the substitute data are not input into the buffer unit and that the video data received by the communication unit are input into the buffer unit when the interrupted stream of video data is recovered.

6. An image control method for an electronic apparatus including a buffer unit and a video processing unit that records and plays back data sequentially output from the buffer unit, the image control method comprising:
monitoring an amount of data accumulated in the buffer unit while monitoring a state of a stream of video data that is transmitted through a computer network and received by a communication unit provided in the electronic apparatus; and
performing control so that substitute data to be substituted for the video data are input into the buffer unit when the stream of the video data received by the communication unit is interrupted and the amount of the data accumulated in the buffer unit is smaller than a predetermined amount.

7. The image control method according to claim 6, further comprising performing control so that the substitute data are not input into the buffer unit and that data remaining in the buffer unit are recorded or played back by the video processing unit when the stream of video data received by the communication unit is interrupted and the amount of the data accumulated in the buffer unit is not smaller than the predetermined amount.

8. The image control method according to claim 6, further comprising performing control so that the substitute data are not input into the buffer unit and that the video data received by the communication unit are input into the buffer unit when the interrupted stream of video data is recovered.

9. A computer-readable program product for causing a computer to control image, the computer including a buffer unit and a video processing unit that records and plays back data sequentially output from the buffer unit, the program product causing the computer to perform procedures comprising:
monitoring an amount of data accumulated in the buffer unit while monitoring a state of a stream of video data that is transmitted through a computer network and received by a communication unit provided in the electronic apparatus; and
performing control so that substitute data to be substituted for the video data are input into the buffer unit when the stream of the video data received by the communication unit is interrupted and the amount of the data accumulated in the buffer unit is smaller than a predetermined amount.

10. The program product according to claim 9, further causing the computer to perform procedures comprising performing control so that the substitute data are not input into the buffer unit and that data remaining in the buffer unit are recorded or played back by the video processing unit when the stream of video data received by the communication unit is interrupted and the amount of the data accumulated in the buffer unit is not smaller than the predetermined amount.

11. The program product according to claim 9, further causing the computer to perform procedures comprising performing control so that the substitute data are not input into the buffer unit and that the video data received by the communication unit are input into the buffer unit when the interrupted stream of video data is recovered.
